# EUROPÄISCHE PATENTANMELDUNG

(11) **EP 0 896 011 A1**
(43) Veröffentlichungstag der Anmeldung: **10.02.1999**
(21) Anmeldenummer: 98114494.2
(22) Anmeldetag: 01.08.1998
(51) Int. Cl.: C08G 18/40, C08G 18/62

(54) **Mischungen enthaltend Polysäuren und gegenüber Isocyanaten reaktive Verbindungen mit mindestens einer Hydroxyl- und/oder Aminogruppe**

(30) Priorität: 07.08.1997 DE 19734210
(71) Anmelder: BASF AKTIENGESELLSCHAFT, 67056 Ludwigshafen (DE)
(72) Erfinder: Scherzer, Dietrich, Dr., 67433 Neustadt (DE); Treuling, Ulrich, Dr., 64625 Bernsheim (DE); Müller-Mall, Rudolf, Dr., 67141 Neuhofen (DE); Kreyenschmidt, Martin, Dr., 67551 Worms (DE)

(57) **Zusammenfassung**

Mischung enthaltend mindestens eine Verbindung (a), die mindestens 3 Carboxylgruppen und/oder Carboxylatgruppen aufweist, sowie mindestens eine Verbindung (b), die gegenüber Isocyanaten reaktiv ist und mindestens eine Hydroxyl- und/oder Amingruppe enthält.

## Beschreibung

Die Erfindung bezieht sich auf Mischungen enthaltend mindestens eine Verbindung (a), die mindestens 3 Carboxylgruppen und/oder Carboxylatgruppen aufweist, sowie mindestens eine Verbindung (b), die gegenüber Isocyanaten reaktiv ist und mindestens eine Hydroxyl- und/oder Amingruppe enthält. Des Weiteren betrifft die Erfindung Verfahren zur Herstellung von Polyisocyanat-Polyadditionsprodukten durch Umsetzung von mindestens einem Polyisocyanat mit mindestens einer Verbindung (b), die gegenüber Isocyanaten reaktiv ist und mindestens eine Hydroxyl- und/oder Amingruppe enthält, gegebenenfalls in Gegenwart von Katalysatoren, Treibmitteln und Hilfs- und/oder Zusatzstoffen sowie die Verwendung von einer Verbindung (a), die mindestens 3 Carboxylgruppen und/oder Carboxylatgruppen aufweist, bei der Herstellung von Polyisocyanat-Polyadditionsprodukten zur Verbesserung der Lagerstabilität der Polyisocyanat-Polyadditionsprodukte.

Die Herstellung von Polyisocyanat-Polyadditionsprodukten durch Umsetzung von Polyisocyanaten mit gegenüber Isocyanaten reaktiven Verbindungen, Katalysatoren, die die Reaktion der gegenüber Isocyanaten reaktiven Stoffe mit Isocyanaten beschleunigen und gegebenenfalls Treibmittel, Zusatzstoffe, und/oder Hilfsmittel ist allgemein bekannt.

Zur Verbesserung der Lagerstabilität dieser Polyisocyanat-Polyadditionsprodukte, d.h. einem vermindertem thermischen Abbau und einer verringerten Vergilbung, war es bekannt, beispielsweise Ester, beschrieben in EP-A 137 407, Phosphate, beschrieben in EP-A 137 408, oder Antioxidantien, beschrieben in EP-A 199 194, einzusetzen. Der Einsatz dieser Stoffe zur Verbesserung der Lagerstabilität der Polyisocyanat-Polyadditionsprodukte führt insbesondere bei dem Einsatz von niedermolekularen Stabilisatoren zu nachteiligen Eigenschaften der Polyadditionsprodukte, da die Stabilisatoren die Neigung zeigen, aus den Produkten zu migrieren.

Aufgabe der vorliegenden Erfindung war es somit, eine Mischung zu entwickeln, deren Einsatz bei der Herstellung von Polyisocyanat-Polyadditionsprodukten zu Produkten führt, die eine verbesserte Lagerstabilität, insbesondere eine besonders geringe Tendenz zur Abgabe von Abbauprodukten aufweisen.

Diese Aufgabe konnte durch Mischungen enthaltend mindestens eine Verbindung (a), die mindestens 3 Carboxylgruppen und/oder Carboxylatgruppen aufweist, sowie mindestens eine Verbindung (b), die gegenüber Isocyanaten reaktiv ist und mindestens eine Hydroxyl- und/oder Amingruppe enthält, gelöst werden.

Als Verbindung (a), im Folgenden auch als Polysäure bezeichnet, können beispielsweise organische Carbonsäuren, die mindestens 3, bevorzugt 7 bis 7000, besonders bevorzugt 15 bis 1400 Carboxylgruppen und/oder Carboxylatgruppen enthalten, eingesetzt werden. Diese Verbindungen weisen bevorzugt ein Molekulargewicht von 500 bis 500000, besonders bevorzugt von 1000 bis 100000, auf. Die erfindungsgemäßen Mischungen enthalten bevorzugt organische Polysäuren, die die folgende Struktureinheit aufweisen: 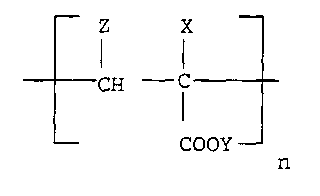 mit
- n:: eine ganze Zahl der Zahlenmenge von einschließlich 3 bis einschließlich 7000;
- X:: H oder geradkettiger oder verzweigter Alkylrest mit 1 bis 6 Kohlenstoffatomen, bevorzugt H, Methyl, Ethyl;
- Y:: H oder ein Kation;
- Z:: H oder -COOY.

Bevorzugt beträgt n in den dargestellten Formeln für die organischen Polysäuren 7 bis 7000, besonders bevorzugt 15 bis 1400. Bevorzugt werden in den Mischungen Polyacrylsäuren, Polymethacrylsäuren, Polysäuren auf der Basis von Maleinsäure, Copolymerisate von Acrylsäure und/oder Methacrylsäure und/oder Maleinsäure, Copolymerisate von Acrylsäure, Methacrylsäure und/oder Maleinsäure mit weiteren ungesättigten Carbonsäuren und/oder die Carboxylate dieser Polycarbonsäuren eingesetzt.

Die Polysäuren können beispielsweise nach allgemein bekannten Polymerisationsverfahren aus den bekannten Ausgangsstoffen, beispielsweise Acrylsäure und/oder Methacrylsäure und/oder Maleinsäure hergestellt werden. Die Polysäuren können sowohl als Säuren, wobei Y in Formel 1 Wasserstoff entspricht, als auch als Carboxylate in der erfindungsgemäßen Mischung vorliegen. Als Gegenionen der Carboxylate können allgemein übliche Kationen, beispielsweise Na+, K+ und/oder allgemein bekannte protonierte Amine dienen. Besonders wirksam für die Bildung von Isocyanuratstrukturen sind die Kaliumsalze solcher organischen Polysäuren. Benachbart zu der erfindungsgemäßen Struktureinheit, beispielsweise an den Enden der Polysäure, können übliche Struktureinheiten eingesetzt werden, wie sie beispielsweise bei einer anionischen oder radikalischen Polymerisation, beispielsweise durch den Einsatz von Initiatorverbindungen, von ungesättigten Carbonsäuren entstehen.

Bevorzugt weisen die erfindungsgemäßen Polysäure mindestens eine der folgenden Struktureinheiten (i), (ii) und/oder (iii) auf, wobei auch Polysäuren, die als Copolymerisate mindestens 2 unterschiedliche Struktureinheiten der folgenden Struktureinheiten aufweisen, möglich sind: 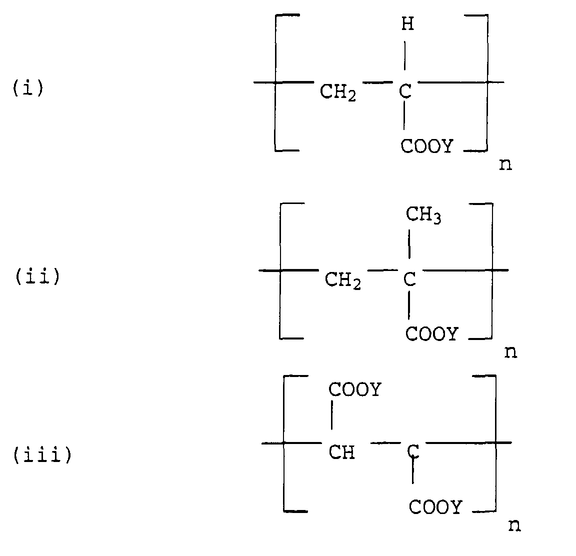 wobei n und Y die bereits genannten Bedeutungen haben. Die erfindungsgemäßen Polysäuren können die angegebenen Struktureinheiten in Form von Blöcken (Blockpolymerisate) als auch statistisch verteilt enthalten.

Beispielsweise kann mindestens eine Polysäure der folgenden allgemeinen Formel eingesetzt werden: 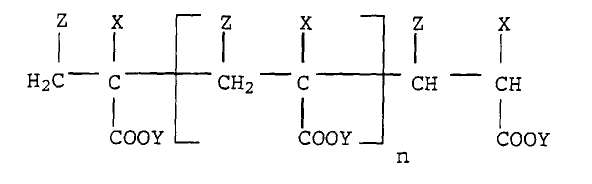 mit
- n:: eine ganze Zahl der Zahlenmenge von einschließlich 1 bis einschließlich 7000;
- X:: H oder geradkettiger oder verzweigter Alkylrest mit 1 bis 6 Kohlenstoffatomen, bevorzugt H, Methyl, Ethyl;
- Y:: H oder ein Kation;
- Z:: H oder -COOY.

Zusätzlich zu den Polysäuren (a) enthalten die erfindungsgemäßen Mischungen mindestens eine Verbindung (b), die gegenüber Isocyanaten reaktiv ist und mindestens eine Hydroxyl- und/oder Amingruppe enthalten. Die Verbindung weist vorzugsweise mindestens zwei reaktiven Wasserstoffatomen auf. Zweckmäßigerweise werden als Verbindung (b) Substanzen mit einer Funktionalität von 2 bis 8, vorzugsweise 2 bis 6, und einem Molekulargewicht von üblicherweise 60 bis 10000, verwendet. Bewährt haben sich z.B. Polyetherpolyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 60 bis 8000.

Als Polyether-polyole eignen sich beispielsweise auch polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril.

Die Polyether-polyole können ebenso wie die Polyester-polyole einzeln oder in Form von Mischungen verwendet werden. Ferner können sie mit den Pfropf-polyether-polyolen oder Polyesterpolyolen sowie hydroxylgruppenhaltigen Polyesteramiden, Polyacetalen, Polycarbonaten und/oder Polyether-polyaminen gemischt werden.

Als gegenüber Isocyanaten reaktive Verbindungen (b) mit einem Molekulargewicht von 60 bis 10000 können des weiteren Kettenverlängerungs- und/oder Vernetzungsmitteln in den erfindungsgemäßen Mischungen verwendet werden. Beispielsweise zur Modifizierung der mechanischen Eigenschaften der mit den erfindungsgemäßen Mischungen herstellbaren Polyisocyanat-Polyadditionsprodukten, z.B. der Härte, kann sich der Zusatz von Kettenverlängerungsmitteln, Vernetzungsmitteln oder gegebenenfalls auch Gemischen davon als Verbindung (b) in den erfindungsgemäßen Mischungen als vorteilhaft erweisen. Als Kettenverlängerungs- und/oder Vernetzungsmittel können Diole und/oder Triole mit Molekulargewichten von 60 bis 500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese in den erfindungsgemäßen Mischungen und bei der Herstellung der Polyisocyanat-Polyadditionsprodukte zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen (b) zum Einsatz.

Das Gewichtsverhältnis von (a) zu (b) in den erfindungsgemäßen Mischungen beträgt bevorzugt 0,001 : 1 bis 0,2 : 1, besonders bevorzugt 0,01 : 1 bis 0,1 : 1.

Zusätzlich zu den erfindungsgemäßen Polysäuren (a) und gegenüber Isocyanaten reaktive Verbindungen (b) mit mindestens einer Hydroxyl- und/oder Amingruppe und einem Molekulargewicht von 60 bis 10000 können die erfindungsgemäßen Mischungen Treibmittel, Zusatzstoffe, Hilfsmittel und/oder übliche Katalysatoren, die die Reaktion der gegenüber Isocyanaten reaktiven Stoffe (b) mit Isocyanaten, beispielsweise die Treib- und/oder Vernetzungsreaktion beschleunigen, beispielsweise organische Amine oder Metallsalze wie z.B. organische Zinnsalze, enthalten.

Die erfindungsgemäßen Mischungen kann man bevorzugt zur Herstellung von Polyisocyanat-Polyadditionsprodukten nach allgemein bekannten Verfahren durch Umsetzung von mindestens einem Polyisocyanat mit mindestens einer Verbindung, die gegenüber Isocyanaten reaktiv ist und mindestens eine Hydroxyl- und/oder Amingruppe enthält, gegebenenfalls in Gegenwart von Katalysatoren, Treibmitteln, Hilfs- und/oder Zusatzstoffen einsetzen. Als Polyisocyanat-Polyadditionsprodukte können beispielsweise kompakte oder zellige, beispielsweise mikrozellige, weiche, halbharte oder harte Polyurethanschäume, oder thermoplastische Polyurethane nach üblichen Verfahren unter Verwendung der erfindungsgemäßen Mischungen hergestellt werden.

Bevorzugt setzt man die erfindungsgemäßen Mischungen in allgemein bekannten Verfahren zur Herstellung von geschäumten Polyisocyanat-Polyadditionsprodukten durch Umsetzung von mindestens einem Polyisocyanat mit mindestens einer Verbindung, die gegenüber Isocyanaten reaktiv ist und mindestens eine Hydroxyl- und/oder Amingruppe enthält, in Gegenwart von Treibmitteln und gegebenenfalls Katalysatoren und Hilfs- und/oder Zusatzstoffen ein.

Bevorzugt können die erfindungsgemäßen Mischungen des weiteren zur Herstellung von thermoplastischen Polyisocyanat-Polyadditionsprodukten durch allgemein bekannte Umsetzung von mindestens einem Polyisocyanat mit mindestens einer Verbindung, die gegenüber Isocyanaten reaktiv ist und mindestens eine Hydroxyl- und/oder Amingruppe enthält, gegebenenfalls in Gegenwart von Treibmitteln, Katalysatoren und Hilfs- und/oder Zusatzstoffen ein.

Die Polysäuren der erfindungsgemäßen Mischungen können nach der Umsetzung der Reaktionsgemische zur Herstellung der Polyisocyanat-Polyadditionsprodukten als Säuren, zumindestens teilweise deprotoniert, d.h. als Salze, und/oder als Umsetzungsprodukte durch eine Reaktion mit den Polyisocyanaten in den Polyisocyanat-Polyadditionsprodukten vorliegen. Soweit bei der Herstellung der Polyisocyanat-Polyadditionsprodukte die Gegenwart von Wasser nicht unerwünscht ist oder sogar Wasser beispielsweise als Treibmittel eingesetzt wird, können die organischen Polysäuren als wässrige Lösungen oder Suspensionen, beispielsweise in einer Konzentration von 10 bis 80 Gew.-%, bezogen auf das Gewicht des Wassers, eingesetzt werden.

Zu den Ausgangsstoffen für die Herstellung der Polyisocyanat-Polyadditionsprodukte kann beispielhaft das Folgenden ausgeführt werden:

Als Polyisocyanate kommen die an sich bekannten aliphatischen, cycloaliphatischen, araliphatischen und vorzugsweise aromatischen mehrwertigen organischen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende, d.h. beispielsweise mit Di- und/oder Polyoxyalkylenglykolen modifizierte organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat, NDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser, das auch als Kettenverlängerungs- und/oder Vernetzungsmittel wirken kann, eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Katalysatoren können Verbindungen verwendet werden, die die Reaktion der reaktive Wasserstoffatome, insbesondere Hydroxylgruppen, enthaltenden Verbindungen mit den organischen, gegebenenfalls modifizierten Polyisocyanaten (a) stark beschleunigen. In Betracht kommen beispielsweise organische Metallverbindungen, vorzugsweise organische Zinnverbindungen oder für diesen Zweck allgemein bekannte organische Amine. Beispielhaft seien genannt: Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethylhexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxyethanol, Dimethylethanolamin, Tetramethylhexamethylendiamin, Dimethylamino-N-methyl-ethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Die organischen Metallverbindungen werden allein oder vorzugsweise in Kombination mit basischen Aminen eingesetzt.

Als Hilfsmittel und/oder Zusatzstoffe seien beispielsweise allgemein bekannte oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Zur Herstellung der Polyisocyanat-Polyadditionsprodukte, beispielsweise kompakten oder zelligen, beispielsweise mikrozelligen, thermoplastischen oder vernetzten, harten, halbharten oder weichen, elastischen oder unelastischen Polyurethanen werden die organischen Polyisocyanate und die gegenüber Isocyanaten reaktiven Verbindungen (b) mit einem Molekulargewicht von 60 bis 10000 g/mol üblicherweise in solchen Mengen zur Umsetzung gebracht, daß das Äquivalenzverhältnis von NCO-Gruppen der Polyisocyanate (a) zur Summe der reaktiven Wasserstoffatome der gegenüber Isocyanaten reaktiven Verbindungen 0,5 bis 5 : 1 vorzugsweise 0,95 bis 3 : 1 und insbesondere 1 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, beispielsweise mit Hilfe der Hochdruck- oder Niederdruck-Technik in offenen oder geschlossenen Formwerkzeugen oder Bandanlagen, oder dem bekannten Prepolymer-Verfahren hergestellt werden.

Die in Gegenwart der erfindungsgemäßen Polysäuren hergestellten Polyisocyanat-Polyadditionsprodukte weisen eine verbesserte Lagerstabilität auf, d.h. eine geringere Verfärbung oder Vergilbung sowie eine verbesserte thermische Stabilität.

Zudem wird durch die Herstellung der Polyisocyanat-Polyadditionsprodukte in Gegenwart der Polysäuren die Abgabe von niedermolekularen Verbindungen, z.B. basischen Verbindungen mit einem Molekulargewicht von 50 bis 1000, beispielsweise organischen Aminen mit einem Molekulargewicht von 50 bis 1000, aus den Polyisocyanat-Polyadditionsprodukten, beispielsweise Polyurethanweichschaumstoffen oder Polyurethanhartschaumstoffen, vermindert. Dieser Vorteil, daß die niedermolekularen Verbindungen, z.B. Abbauprodukte der Polyisocyanat-Polyadditionsprodukte durch Alterung oder äußere Einflüsse, durch die Zugabe der erfindungsgemäßen Polysäuren zu mindestens einer der Ausgangskomponente zur Herstellung von Polyisocyanat-Polyadditionsprodukten in den Polyisocyanat-Polyadditionsprodukten gehalten werden und nicht aus diesen Produkten austreten, konnte bislang nicht erreicht werden.

Die Erfindung soll anhand der folgenden Beispiele dargestellt werden.

### Beispiele 1 bis 4

Eine Mischung bestehend aus 30 Gew.-Teilen Systol® T 122 (Polyethylenglykol) der Elastogran GmbH, 50,7 Gew.-Teilen Lupranol® (Polyalkohol) der BASF Aktiengesellschaft, 0,18 Gew.-Teilen Lupragen® N 206 und Lupragen® N 209 (Aminkatalysatoren) der BASF Aktiengesellschaft, 0,25 Gew.-Teilen Lupragen® KX 25 (Katalysator) der BASF Aktiengesellschaft; 8 Gew.-Teilen Glycerin; 1,2 Gew.-Teilen Wasser; 0,6 Gew.-Teilen Tegostab® B 8404 (Schaumstabilisator) der Fa. Goldschmidt wurden mit der in der Tabelle 1 angegebenen Menge Sokalan® PA 80 S (Copolymer enthaltend Acrylsäure/Maleinsäure, Molekulargewicht ca. 80000, in der Tabelle 1 angegeben als Polysäure) der BASF versetzt und mit einem Laborrührer mit 160 Gew.-Teilen Lupranat® M 20 W (polymeres MDI) der BASF, innig vermischt, wobei pro Ansatz eine Reaktionsmischung mit einem Gewicht von 250 g verwendet wurde.

Die hergestellten Schäume wurden im Trockenschrank bei 120°C thermisch belastet und nach 5 Tagen Lagerzeit in Bezug auf ihre Struktur und Verfärbungen beurteilt.

### Beispiele 5 bis 8

In einer zweiten Versuchsreihe wurde entsprechend den Beispielen 1 bis 4 verfahren, mit dem Unterschied, daß eine eine PVC-Folie, wie sie zur Herstellung von PKW-Amaturtafeln verwendet wird, bei der Herstellung der Schäume hinterschäumt wurde. Die Schaumproben wurden ebenfalls bei 120°C gelagert und anschließend beurteilt. Die Ergebnisse sind ebenfalls in Tabelle 1 dargestellt.

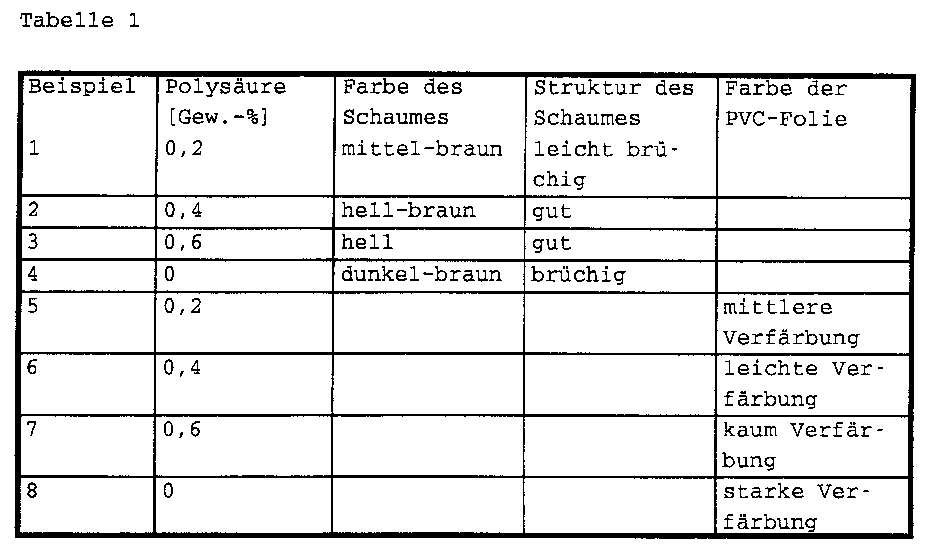

Die Gewichtsangabe [Gew.-%] in der Tabelle 1 zu der Polysäure bezieht sich auf das Gewicht der Hydroxylgruppen-enthaltenden Verbindungen in dem Reaktionsansatz.

Die in der Tabelle 1 dargestellten Ergebnisse zeigen deutlich die verbesserte Lagerstabilität der erfindungsgemäß hergestellten Polyisocyanat-Polyadditionsprodukte. Sowohl in Bezug auf die Farbe als auch auf die Struktur der Schäume zeigen die Produkte eine wesentlich verbesserte Lagerstabilität, insbesondere bei erhöhten Temperaturen.

## Patentansprüche

1. Mischung enthaltend mindestens eine Verbindung (a), die mindestens 3 Carboxylgruppen und/oder Carboxylatgruppen aufweist, sowie mindestens eine Verbindung (b), die gegenüber Isocyanaten reaktiv ist und mindestens eine Hydroxyl- und/oder Amingruppe enthält.

2. Mischungen nach Anspruch 1, dadurch gekennzeichnet, daß man als Verbindung (a) Polyacrylsäure, Polymethacrylsäure, Polysäuren auf der Basis von Maleinsäure, Copolymerisate von Acrylsäure und/oder Methacrylsäure und/oder Maleinsäure, Copolymerisate von Acrylsäure, Methacrylsäure und/oder Maleinsäure mit weiteren ungesättigten Carbonsäuren und/oder die Carboxylate dieser Polycarbonsäuren einsetzt.

3. Mischung nach Anspruch 1 oder 2, dadurch gekennzeichnet, daß die Mischung Treibmittel zur Herstellung von geschäumten Polyisocyanat-Produkten und/oder Katalysatoren, die die Reaktion von Isocyanaten mit gegenüber Isocyanaten reaktiven Verbindungen beschleunigen, enthält.

4. Mischung nach einem der Ansprüche 1 bis 3, dadurch gekennzeichnet, daß man als Verbindung (b) mindestens ein Polyetherpolyol, Polyesterpolyol und/oder Polyetherpolyesterpolyol einsetzt.

5. Verfahren zur Herstellung von Polyisocyanat-Polyadditionsprodukten durch Umsetzung von mindestens einem Polyisocyanat mit mindestens einer Verbindung (b), die gegenüber Isocyanaten reaktiv ist und mindestens eine Hydroxyl- und/oder Amingruppe enthält, gegebenenfalls in Gegenwart von Katalysatoren, Treibmitteln und Hilfs- und/oder Zusatzstoffen, dadurch gekennzeichnet, daß man die Umsetzung in Gegenwart von mindestens einer Verbindung (a), die mindestens 3 Carboxylgruppen und/oder Carboxylatgruppen aufweist, sowie von mindestens einer Verbindung (b), die gegenüber Isocyanaten reaktiv ist und mindestens eine Hydroxyl- und/oder Amingruppe enthält, durchführt.

6. Verfahren zur Herstellung von geschäumten Polyisocyanat-Polyadditionsprodukten durch Umsetzung von mindestens einem Polyisocyanat mit mindestens einer Verbindung (b), die gegenüber Isocyanaten reaktiv ist und mindestens eine Hydroxyl- und/oder Amingruppe enthält, in Gegenwart von Treibmitteln und gegebenenfalls Katalysatoren und Hilfs- und/oder Zusatzstoffen, dadurch gekennzeichnet, daß man die Umsetzung in Gegenwart von mindestens einer Verbindung (a), die mindestens 3 Carboxylgruppen und/oder Carboxylatgruppen aufweist, sowie von mindestens einer Verbindung (b), die gegenüber Isocyanaten reaktiv ist und mindestens eine Hydroxyl- und/oder Amingruppe enthält, durchführt.

7. Verfahren nach Anspruch 6, dadurch gekennzeichnet, daß das geschäumte Polyisocyanat-Polyadditionsprodukt eine Dichte von 20 bis 200 g/l aufweist.

8. Verfahren zur Herstellung von thermoplastischen Polyisocyanat-Polyadditionsprodukten durch Umsetzung von mindestens einem Polyisocyanat mit mindestens einer Verbindung (b), die gegenüber Isocyanaten reaktiv ist und mindestens eine Hydroxyl- und/oder Amingruppe enthält, gegebenenfalls in Gegenwart von Katalysatoren, Treibmitteln und Hilfs- und/oder Zusatzstoffen, dadurch gekennzeichnet, daß man die Umsetzung in Gegenwart von mindestens einer Verbindung (a), die mindestens 3 Carboxylgruppen und/oder Carboxylatgruppen aufweist, sowie von mindestens einer Verbindung (b), die gegenüber Isocyanaten reaktiv ist und mindestens eine Hydroxyl- und/oder Amingruppe enthält, durchführt.

9. Polyisocyanat-Polyadditionsprodukte erhältlich durch ein Verfahren gemäß einem der Ansprüche 5 bis 8.

10. Verwendung von einer Verbindung (a), die mindestens 3 Carboxylgruppen und/oder Carboxylatgruppen aufweist, bei der Herstellung von Polyisocyanat-Polyadditionsprodukten zur Verbesserung der Lagerstabilität der Polyisocyanat-Polyadditionsprodukte.
